# FASCICULE DE BREVET EUROPEEN

(11) **EP 2 578 892 B1**
(45) Date de publication et mention de la délivrance du brevet: **03.08.2016**
(21) Numéro de dépôt: 12187387.1
(22) Date de dépôt: 05.10.2012
(51) Int. Cl.: F16B 37/04

(54) **Dispositif de fixation avec écrou**
Befestigungsvorrichtung mit Mutter
Attachment device with nut

(30) Priorité: 06.10.2011 FR 1159034
(43) Date de publication de la demande: 10.04.2013
(73) Titulaire: LISI Automotive Rapid, 95650 Puiseux-Pontoise (FR)
(72) Inventeur: Dacosta, Serge, 95720 Bouqueval (FR)
(74) Mandataire: Thinat, Michel

(56) Documents cités:
- EP-A2- 2 258 955
- DE-A1- 2 328 676
- DE-A1-102009 024 532
- FR-A1- 2 934 336
- US-A- 6 146 071

## Description

La présente invention concerne un dispositif de fixation adapté pour être pré-positionné sur une pièce, notamment une pièce en matière plastique, destinée à être fixée sur une tôle.

Le dispositif de fixation comprend un écrou empêché de rotation et adapté pour coopérer avec une vis pour la fixation de la pièce sur la tôle.

Lorsqu'une pièce en matière plastique doit être fixée sur une tôle, par exemple sur la carrosserie d'un véhicule automobile, notamment lorsque la pièce en matière plastique doit être fixée sur la tôle par une ou plusieurs vis engagées dans des trous de passage formés dans la tôle à cet effet, chacun de ces trous représente en même temps un passage pour de l'eau et constitue ainsi un nid de corrosion. En outre, sous l'influence de chaleur, la tôle et la pièce en matière plastique ne se dilatent pas de la même façon. Et enfin, pour ne citer de manière non exhaustive que trois inconvénients des fixations habituelles, aussi bien la tôle que la pièce en matière plastique sont soumises à de la flexion, ce qui interdit de fixer la pièce en matière plastique de manière rigide sur la tôle.

Ainsi, le but de l'invention est de proposer un dispositif de fixation adapté pour pallier les inconvénients énoncés ci-avant.

Un dispositif de fixation pouvant pallier au moins une partie des inconvénients est connu du document US-A-6 146 071. Ce dispositif comprend un moyen de fixation, par exemple un écrou, maintenu dans un rail de montage par une pince en U formée à partir d'une feuille unique.

Le but de l'invention est atteint avec un dispositif de fixation adapté pour être pré-positionné sur une pièce destinée à être fixée sur une tôle, le dispositif comprenant un écrou adapté pour coopérer avec une vis pour la fixation de la pièce sur la tôle et au moins une pince en U formée à partir d'une feuille unique d'un matériau résilient, l'écrou étant placé entre les deux branches de la pince.

Selon la présente invention, l'écrou est tenu par des bras formés de matière avec une des branches de la pince et s'étendant de part et d'autre de l'écrou en pente montante à partir de l'extrémité libre de la branche en direction du fond de la pince en U de façon à s'escamoter au moins partiellement lorsque la pince est pré-positionnée sur la pièce.

L'invention concerne également l'une au moins des caractéristiques supplémentaires ci-après, considérées isolément ou selon toute combinaison techniquement possible :
- pour la ou pour chacune des pinces, les organes tenant l'écrou comprennent deux bras s'étendant de part et d'autre le long de l'écrou ;
- pour la ou pour chacune des pinces, les organes tenant l'écrou comprennent un embouti formé dans l'une ou l'autre des deux branches de la pince pour empêcher la rotation de l'écrou avant le montage de la pièce sur la tôle, la mobilité de l'écrou vers le fond de la pince étant limitée du fait que l'écrou est serti ;
- le dispositif comprend pour la ou pour chacune des pinces, des agents de positionnement de la pince par rapport à la pièce assurant à l'écrou une mobilité dans le sens de la longueur de la pince ;
- les bras sont pourvus de bossages adaptés pour coopérer avec des dégagements de centrage formés dans la pièce ;
- la hauteur des bossages est supérieure à la profondeur des dégagements de centrage de la pièce pour empêcher une mobilité transversale de l'écrou lorsque la pince est disposée dans la pièce ;
- le dispositif comprend en outre au moins un élément en matière souple adapté pour servir comme élément d'étanchéité entre la pièce et la tôle ;
- le dispositif comprend autant d'éléments en matière souple que de pinces servant comme éléments d'étanchéité entre la pièce et la tôle ;
- le dispositif comprend un élément unique en matière souple adapté pour servir comme élément d'étanchéité entre la pièce et la tôle.

D'autres caractéristiques et avantages de la présente invention ressortiront de la description ci-après d'un mode de réalisation de l'invention. La description est faite en référence aux dessins dont :
- la figure 1 est une vue en perspective d'un dispositif de fixation selon l'invention,
- la figure 2 représente une pièce en matière plastique adaptée pour recevoir un dispositif de fixation selon l'invention,
- la figure 3 est une vue en perspective de la pièce en matière plastique de la figure 2 équipée d'un dispositif selon la figure 1,
- la figure 4 représente la pièce équipée de la figure 3 en une vue de dessous,
- la figure 5 est une vue en coupe de la pièce équipée des figures 2 et 4, et
- la figure 6 représente le dispositif de l'invention de la figure 1 dans une application avec plusieurs dispositifs selon l'invention.

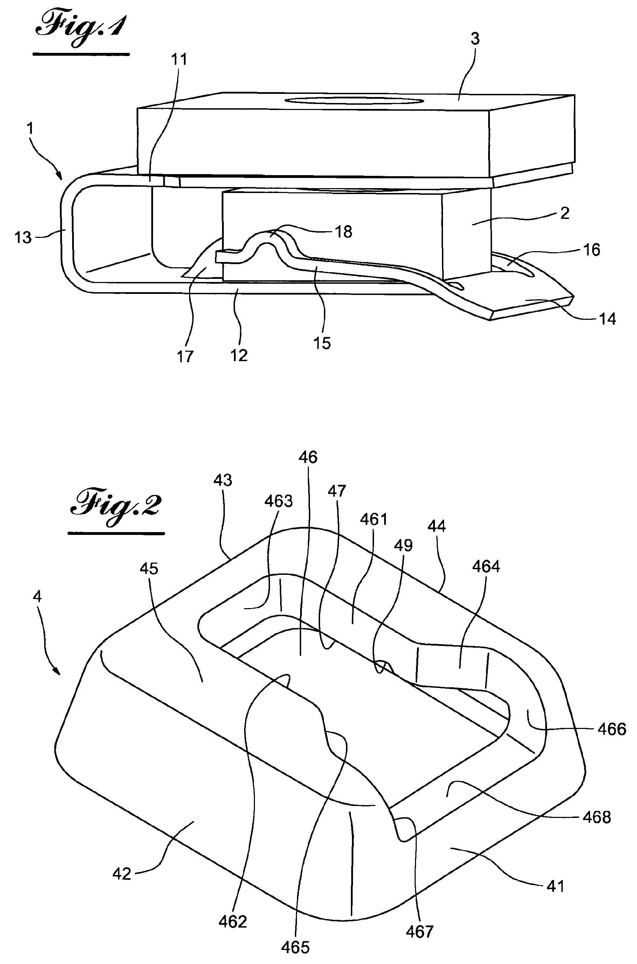

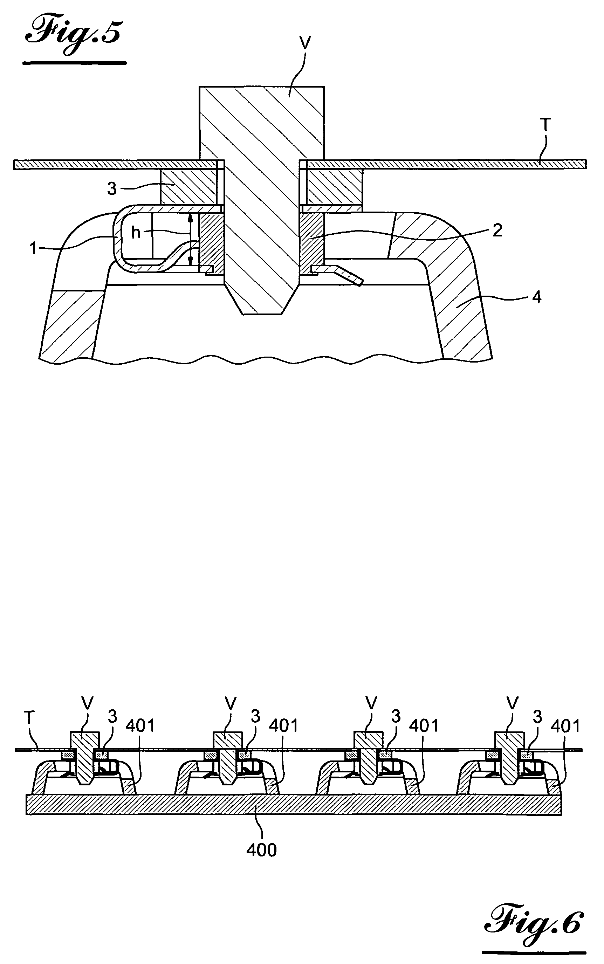

La figure 1 représente un dispositif de fixation selon l'invention. Le dispositif comprend une pince 1 en U formée à partir d'une feuille unique d'un matériau résilient. La pince 1 comprend deux branches 11, 12 entre lesquelles est placé un écrou 2 et qui s'étendent parallèlement l'une à l'autre et sont reliées l'une à l'autre par un fond 13. La hauteur h du fond 13, qui détermine l'écartement des deux branches 11, 12 l'une de l'autre (voir figure 5), est légèrement supérieure à la hauteur de l'écrou 2 afin de garantir à ce dernier une certaine liberté de mouvement. La pince 1 est avantageusement obtenue par emboutissage.

La figure 1 représente la pince 1 avec un écrou 2 placé entre les deux branches 11 et 12 de la pince 1 et avec un corps souple 3 posé sur la branche 11 du côté extérieur de la pince. Le corps 3 sert comme joint d'étanchéité entre la pince et la tôle sur laquelle une pièce doit être fixée moyennant la pince 1.

Afin de pouvoir retenir l'écrou 2, qui est un écrou de forme générale parallélépipédique, à l'intérieur de la pince 1, la branche 12 est pourvue de deux bras 15, 16 s'étendant en pente montante à partir de l'extrémité libre 14 de la branche 12 en direction du fond 13 de la pince 1. Les deux bras 15, 16 comportent des bossages 18, 19 en proéminence vers la branche 11 de la pince 1. Les deux bras 15, 16 s'étendent de part et d'autre de l'écrou 2 et maintiennent ainsi l'écrou 2 à l'intérieur de la pince 1 avec un degré unique de mobilité, à savoir dans le sens de la longueur de la pince 1. Afin de pouvoir limiter le déplacement de l'écrou 2 vers le fond 13 de la pince 1, la branche 12 est pourvue d'un embouti 17 qui bloque en même temps l'écrou 2 en rotation lors de la fixation de la pièce an matière plastique sur la tôle.

L'extrémité libre 14 de la branche 12 est pliée légèrement vers l'extérieur de la pince 1 pour créer une rampe destinée à faciliter la mise en place de la pince sur une pièce 4 en matière plastique.

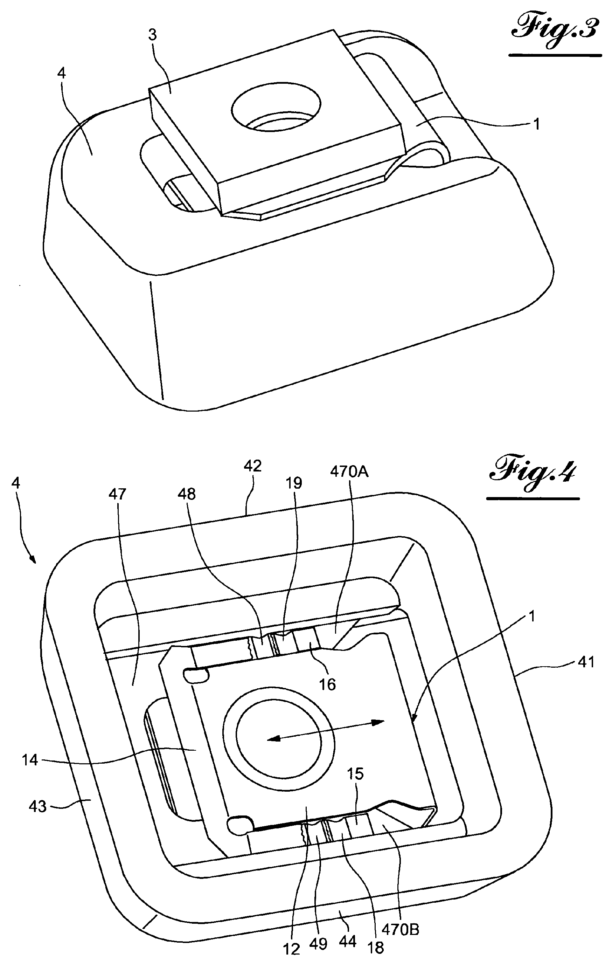

La figure 2 représente une pièce 4 en matière plastique sans dispositif de l'invention. Et les figures 3 et 4 représentent la pièce 4 équipée d'un dispositif de l'invention, respectivement en une vue en perspective sur la face supérieure de la pièce 4 et en une vue de dessous.

La pièce 4 a la forme générale d'un tronc de pyramide creux à base rectangulaire avec deux petites parois latérales opposées 41, 43, deux grandes parois latérales opposées 42, 44 déterminant un sens longitudinal de la pièce 4, une paroi supérieure 45 et une base entièrement ouverte. La paroi supérieure 45 et la petite paroi latérale 41 sont découpées de façon à former une ouverture 46 donnant accès à l'intérieur de la pièce 4 aussi bien par le haut, c'est-à-dire par la paroi supérieure 45, que parallèlement à la base de la pièce 4, c'est-à-dire par la paroi 41.

L'ouverture 46 est délimitée par deux faces en regard 461, 462 s'étendant parallèlement l'une à l'autre dans le sens longitudinal de la pièce 4 et déterminant une petite largeur de l'ouverture 46, une face transversale 463 reliant entre elles les faces en regard 461, 462, des faces obliques 464, 465 prolongeant respectivement la face 461 et la face 462 en direction de la paroi 41 tout en élargissant l'ouverture 46, des faces en regard 466, 467 parallèles l'une à l'autre, prolongeant respectivement la face 464 et la face 465 et déterminant une grande largeur de l'ouverture 46, et une face 468 s'étendant essentiellement dans un plan parallèle à la base de la pièce 4 et reliant entre elles les faces 466, 467.

Grâce à cette forme de l'ouverture 46, la pince 1 peut être introduite parallèlement à la base de la pièce 4 de façon à ce que la branche 11 glisse sur la face supérieure de la paroi 45, que la branche 12 de la pince 1 glisse sur la face inférieure 47 de la paroi 45 de la pièce 4 et que les bras 15, 16 glissent également sur la face inférieure 47 jusqu'à ce que les bossages 18, 19 des bras 15, 16 de la pince 1 s'engagent dans des dégagements 48, 49 formés dans la face inférieure 47 de la paroi 45 de la pièce 4. L'enlèvement de la pince 1 se fait par un mouvement dans le sens opposé, comme cela est indiqué par la flèche à double tête.

Avantageusement mais non nécessairement, la face inférieure 47 de la paroi 45 est pourvue de rails 470A, 470B formant des renforts pour l'appui de la branche 12 de la pince 1 sur la pièce 4 en plastique. Le guidage de la pince 1 sur la pièce 4 se fait par l'écrou 2 et les faces 461, 462 de la pièce 4.

Lorsque la pince 1 est engagée dans l'ouverture 46 de la pièce 4, le joint d'étanchéité 3 vient d'être positionné au-dessus de la pièce 4 et l'écrou 2 est emprisonné entre la face 463 de l'ouverture 46 et l'embouti 17 de la branche 12 de la pince 1. En même temps, les bras 15, 16 sont escamotés, c'est-à-dire pressés sur le niveau de la branche 12, et seuls les bossages 18, 19 des bras 15, 16 restent proéminents par rapport à la branche 12 et tiennent l'écrou 2 latéralement en place.

Cette disposition donne à l'écrou 2 une liberté de mouvement ou de déplacement dans le seul sens de la longueur de la pince 1 et de la pièce 4, comme cela est représenté sur la figure 4 par une flèche à deux têtes opposées s'étendant dans le sens de la longueur de la pince 1.

La figure 5 indique sur une coupe transversale de la pièce 4 et de la pince 1 la hauteur que le fond 13 de la pince 1 doit avoir pour que la pince 1 puisse recevoir l'écrou 2 entre les branches 11 et 12.

La figure 5 représente en outre le dispositif de l'invention selon la figure 1 appliqué pour la fixation d'une pièce en matière plastique 4 sur une tôle T moyennant une vis V qui s'engage dans l'écrou 2. Grâce aux dispositions de l'invention, le dispositif de fixation comprend, selon le premier mode de réalisation de l'invention, un joint d'étanchéité 3 individuel pour chaque pince 1. Et grâce à la présence de ce joint d'étanchéité 3, de l'eau venant du côté de la tête de la vis V ne peut pas rentrer dans la pièce 4.

La figure 6 représente le dispositif de fixation selon l'invention en une application à la fixation d'une pièce en matière plastique 400 par plusieurs dispositifs de l'invention.

Selon l'exemple représenté, la pièce en matière plastique 400 comporte quatre rehaussements 401 dont chaque rehaussement a la forme et la conception de la pièce en matière plastique 4 décrite juste avant. La pièce 400 est fixée sur une tôle T par quatre vis V. Les trous de passage des tôles sont rendus étanches par des joints d'étanchéité 3 individuels faisant partie de chacun des dispositifs de fixation attribués à chacun des rehaussements 401 ou par un joint unique couvrant plusieurs ou tous les perçages de la tôle dans lesquels sont introduits les vis V.

La figure 6 représente plus particulièrement l'importance de la liberté de mouvement de l'écrou 2 dans le dispositif de l'invention. En effet, lorsqu'une pièce en matière plastique est fixée à une tôle à plusieurs points de fixation, le fait qu'elle n'a pas le même coefficient de dilatation que la tôle ferait qu'elle se vrille sous l'effet de la chaleur car le système est hyperstatique. Grâce aux dispositions de l'invention, la pièce plastique peut se dilater sans mettre de contraintes aux points de fixation. De cette manière, l'agencement s'apparente à un système isostatique.

Le dispositif de l'invention présente les avantages suivants :
- la pièce plastique n'est pas en contrainte lors du serrage, elle est libre dans une direction, ici dans le sens longitudinal de la pince ;
- l'écrou garantit de manière précise la cote de hauteur h de l'entretoise, ce qui limite le jeu de la pièce plastique dans la troisième direction (la direction Z) ; et
- les petites formes sur les pattes de pré-maintien garantissent le centrage de l'écrou pince sur les pièces plastiques au moment du montage, ce qui facilite ce dernier.

## Revendications

1. Dispositif de fixation adapté pour être pré-positionné sur une pièce (4) destinée à être fixée sur une tôle (T), le dispositif comprenant un écrou (2) de forme générale parallélépipédique adapté pour coopérer avec une vis (V) pour la fixation de la pièce (4) sur la tôle (T) et au moins une pince (1) en U formée à partir d'une feuille unique d'un matériau résilient, l'écrou (2) étant placé entre les deux branches (11, 12) de la pince (1), **caractérisé en ce que** l'écrou (2) est tenu entre les deux branches (11, 12) par des bras (15, 16) formés de matière avec une (12) des branches de la pince (1) et s'étendant de part et d'autre de l'écrou (2) en pente montante à partir de l'extrémité libre (14) de la branche (12) en direction du fond (13) de la pince (1) en U de façon à s'escamoter au moins partiellement lorsque la pince (1) est pré-positionnée sur la pièce (4).

2. Dispositif selon la revendication 1, **caractérisé en ce que** la ou chacune des pinces (1) est pourvue d'un embouti (17) formé dans l'une ou l'autre des deux branches (11, 12) de la pince (1) pour empêcher la rotation de l'écrou (2) avant le montage de la pièce (4) sur la tôle (T).

3. Dispositif selon la revendication 1 ou 2, **caractérisé en ce que** la ou chacune des pinces (1) comprend des agents de positionnement (18, 19) de la pince par rapport à la pièce (4) assurant à l'écrou (2) une mobilité dans le sens de la longueur de la pince (1).

4. Dispositif selon l'une quelconque des revendications 1 à 3, **caractérisé en ce que** les bras (15, 16) sont pourvus de bossages (18, 19) adaptés pour coopérer avec des dégagements de centrage (44, 45) formés dans la pièce (4).

5. Dispositif selon la revendication 3, **caractérisé en ce que** la hauteur des bossages (18, 19) est supérieure à la profondeur des dégagements de centrage (44, 45) de la pièce (4).

6. Dispositif selon l'une quelconque des revendications 1 à 5, **caractérisé en ce qu'**il comprend au moins un élément (3) en matière souple adapté pour servir comme élément d'étanchéité entre la pièce (4) et la tôle (T), en étant disposé entre la tôle (T) et la branche (11) adjacente de la pince (1).

7. Dispositif selon l'une des revendications 3 à 6, **caractérisé en ce que** la pièce (4) à fixer sur une tôle T est une pièce creuse comporte dans sa paroi extérieure de support (45) une ouverture (46) de réception de la pince (1) pourvue de l'écrou (2), et **en ce que** la pince, dans sa position montée dans la pièce (4) prend appui par ces bras (2) sur les bords de la face interne (47) de la paroi (45) et par sa branche (11) opposée au bras sur la face supérieure extérieure de la paroi (45).

8. Véhicule automobile, **caractérisé en ce qu'**il comprend un dispositif selon l'une quelconque des revendications 1 à 7.

## Patentansprüche

1. Befestigungsvorrichtung, die ausgebildet ist, um auf einem Teil (4) vorpositioniert zu sein, das bestimmt ist, auf einem Blech (T) befestigt zu sein, wobei die Vorrichtung eine allgemein parallelepipedische Mutter (2), die ausgebildet ist, um mit einer Schraube (V) für die Befestigung des Teils (4) auf dem Blech (T) zusammenzuwirken, und mindestens eine U-förmige Klemme (1), die aus einem einzigen Blatt eines elastischen Materials gebildet ist, umfasst, wobei die Mutter (2) zwischen den zwei Schenkeln (11, 12) der Klemme (1) platziert ist, **dadurch gekennzeichnet, dass** die Mutter (2) zwischen den zwei Schenkeln (11, 12) von Armen (15, 16) gehalten wird, die einstückig mit einem (12) der Schenkel der Klemme (1) gebildet sind und sich beidseits der Mutter (2) in steigender Neigung ab dem freien Ende (14) des Schenkels (12) in Richtung des Bodens (13) der U-förmigen Klemme (1) erstrecken, um sich mindestens zum Teil zurückzuziehen, wenn die Klemme (1) auf dem Teil (4) vorpositioniert ist.

2. Vorrichtung nach Anspruch 1, **dadurch gekennzeichnet, dass** die oder jede der Klemmen (1) mit einem Stulp (17) ausgestattet ist, der in dem einen oder dem anderen der zwei Schenkel (11, 12) der Klemme (1) ausgebildet ist, um die Rotation der Mutter (2) vor der Montage des Teils (4) auf dem Blech (T) zu vermeiden.

3. Vorrichtung nach Anspruch 1 oder 2, **dadurch gekennzeichnet, dass** die oder jede der Klemmen (1) Positionierungsmittel (18, 19) der Klemme in Bezug zu dem Teil (4) umfasst, das der Mutter (2) eine Mobilität in die Richtung der Länge der Klemme (1) sichert.

4. Vorrichtung nach einem der Ansprüche 1 bis 3, **dadurch gekennzeichnet, dass** die Arme (15, 16) mit Buckeln (18, 19) ausgestattet sind, die ausgebildet sind, um mit Zentrieraussparungen (44, 45) zusammenzuwirken, die in dem Teil (4) ausgebildet sind.

5. Vorrichtung nach Anspruch 3, **dadurch gekennzeichnet, dass** die Höhe der Buckel (18, 19) höher als die Tiefe der Zentrieraussparungen (44, 45) des Teils (4) ist.

6. Vorrichtung nach einem der Ansprüche 1 bis 5, **dadurch gekennzeichnet, dass** sie mindestens ein Element (3) aus elastischem Material umfasst, das ausgebildet ist, um als Dichtungselement zwischen dem Teil (4) und dem Blech (T) zu dienen, indem es zwischen dem Blech (T) und den benachbarten Schenkel (11) der Klemme (1) angeordnet ist.

7. Vorrichtung nach einem der Ansprüche 3 bis 6, **dadurch gekennzeichnet, dass** das auf einem Blech T zu befestigende Teil (4) ein Hohlteil ist, das in seiner stützenden Außenwand (45) eine Aufnahmeöffnung (46) der mit der Mutter (2) ausgestatteten Klemme (1) aufweist, und dass sich die Klemme, in ihrer in dem Teil (4) montierten Position, anhand ihrer Arme (2) auf den Rändern der Innenfläche (47) der Wand (45) und anhand ihrem dem Arm gegenüberliegenden Schenkel (11) auf der äußeren oberen Fläche der Wand (45) abstützt.

8. Kraftfahrzeug, **dadurch gekennzeichnet, dass** es eine Vorrichtung nach einem der Ansprüche 1 bis 7 umfasst.

## Claims

1. An attachment device suitable for being pre-positioned on a part (4) intended to be fastened on a metal sheet (T), the device comprising a nut (2) with a generally parallelepiped shape suitable for cooperating with a screw (V) for fastening the part (4) on the metal sheet (T) and at least one U-shaped clip (1) formed from a single sheet of a resilient material, the nut (2) being placed between the two branches (11, 12) of the clip (1), **characterized in that** the nut (2) is held between the two branches (11, 12) by arms (15, 16) made integral with one (12) of the branches of the clip (1) and extending on either side of the nut (2) with an upward incline from the free end (14) of the branch (12) toward the bottom (3) of the U-shaped clip (1) so as to retract at least partially when the clip (1) is pre-positioned on the part (4).

2. The device according to claim 1, **characterized in that** the or each of the clips (1) is provided with a cup packing (17) formed in one or the other of the two branches (11, 12) of the clip (1) to prevent rotation of the nut (2) before the assembly of the part (4) on the metal sheet (T).

3. The device according to claim 1 or 2, **characterized in** the or each of the clips (1) comprises positioning agents (18, 19) for positioning the clip relative to the part (4) giving the nut (2) mobility in the direction of the length of the clip 1.

4. The device according to any one of claims 1 to 3, **characterized in that** the arms (15, 16) are provided with bosses (18, 19) suitable for cooperating with centering recesses (44, 45) formed in the part (4).

5. The device according to claim 3, **characterized in that** the height of the bosses (18, 19) is greater than the depth of the centering recesses (44, 45) of the part (4).

6. The device according to any one of claims 1 to 5, **characterized in that** it comprises at least one element (3) made from a flexible material suitable for serving as a sealing element between the part (4) and the metal sheet (T), while being positioned between the metal sheet (T) and the adjacent branch (11) of the clip (1).

7. The device according to one of claims 3 to 6, **characterized in that** the part (4) to be fastened on a metal sheet (T) is a hollow part [including], in its outer support wall (25), an opening (46) for receiving the clip (1) provided with the nut (2), and **in that** the clip, in its position assembled in the part (4), bears by these arms (2) on the edges of the inner face (47) of the wall (45) and by its branch (11) opposite the arm on the outer upper face of the wall (45).

8. A motor vehicle, **characterized in that** it comprises a device according to any one of claims 1 to 7.
